# EUROPEAN PATENT SPECIFICATION

(11) **EP 0 561 476 B1**
(45) Date of publication and mention of the grant of the patent: **01.09.1999**
(21) Application number: 93200791.7
(22) Date of filing: 18.03.1993
(51) Int. Cl.: C07F 5/06, C08F 10/00, C08F 4/602

(54) **Polymethylaluminoxane of enhanced solution stability**
Polymethylaluminoxanlösung mit verbesserter Stabilität der Lösung
Solution de polyméthylaluminoxane avec stabilisation améliorée de la solution

(30) Priority: 18.03.1992 US 853466
(43) Date of publication of application: 22.09.1993
(73) Proprietor: Akzo Nobel N.V., 6824 BM Arnhem (NL)
(72) Inventor: Tran, Nam Hung, Houston, Texas 77075 (US); Deavenport, Dennis Leon, Seabrook, Texas 77586 (US); Malpass, Dennis Benedict, La Porte, Texas 77571 (US); Rabbitt, Constance Sylvie, Pasadena, Texas 77505 (US)
(74) Representative: Schalkwijk, Pieter Cornelis

(56) References cited:
- EP-A- 0 460 741
- DE-A- 1 570 737
- US-A- 5 066 631
- CHEMICAL ABSTRACTS, vol. 116, 1992, Columbus, Ohio, US; abstract no. 129891j, TOMOTSU, N. page 16; & JP-A-03 271 295 (IDEMITSU KOSAN CO., LTD.)
- CHEMICAL ABSTRACTS, vol. 100, 1984, Columbus, Ohio, US; abstract no. 86626b, page 33; & JP-A-58 149 949 (SUMITOMO CHEMICAL CO., LTD.)
- CHEMICAL ABSTRACTS, vol. 117, 1992, Columbus, Ohio, US; abstract no. 8699q, TOMOTSU, N. page 15; JP-A-04 049 293 (IDEMITSU KOSAN K.K.)
- CHEMICAL ABSTRACTS, vol. 88, 1978, Columbus, Ohio, US; abstract no. 38222d, MESHKOVA, I.N. ET AL. page 5; & VYSOKOMOL. SOEDIN. SER B vol. 19, no. 11, 1977, pages 849 - 852
- CHEMICAL ABSTRACTS, vol. 112, 1990, Columbus, Ohio, US; abstract no. 119608a, KIOKA, M. ET AL. page 11; & JP-A-01 258 686 (MITSUI PETROCHEMICAL, INDUSTRIES, LTD.)
- JOURNAL OF ORGANOMETALLIC CHEMISTRY vol. 255, 1983, pages 269 - 278 BOLESLAWSKI, M. ET AL.
- L. Tikwe "Alkylgruppenaustausch an Aluminoxanen unter Verwendung vonTrialkyl-bzw. Triaryl-Aluminiumverbindungen"; master thesis (University of Hamburg), 1987

## Description

### BACKGROUND OF THE INVENTION

Polymethylaluminoxane, which is traditionally formed from the reaction of trimethylaluminum and a source of water, is used as a catalyst component with a metallocene catalyst component in olefin polymerizations. As indicated in European Patent Publication No. 393,358, it is difficult to form homogeneous polymethylaluminoxane solutions having good storage stability due to precipitation or gel formation in such solutions upon storage. This European patent publication mentions the reaction of polymethylaluminoxane with a C₃ to C₉ branched alkylaluminum compound in organic solvent to yield a homogeneous solution. A representative alkylaluminum compound which can be used is triisobutylaluminum.

An earlier disclosure of modified polymethylaluminoxane containing C₂ or higher alkyl groups, which has enhanced solubility in organic solvent is European Patent Publication No. 372,617 which describes compositions containing certain alkyl groups, e.g., isobutyl , n-butyl, and n-hexyl groups. This earlier European patent publication (which corresponds to U.S. Patent No. 5,041,584) does not specifically address the issue of enhancing the storage stability of conventional polymethylaluminoxane solutions which are not so modified.

A more recent U.S. patent which describes the use of tri-n-alkylaluminum compounds, having from 2 to 20 carbon atoms in the alkyl groups, to aid in the solubilization of polymethylaluminoxane in hydrocarbon solvent is U.S. Patent No. 5,066,631 to S.A. Sangokoya.

All of the above references focus upon the use of organoaluminum compounds as either reagents or additives to yield homogeneous polymethylaluminoxane solutions.

Japanese Patent Publication No. 271295/1991 describes a process for producing aluminoxane by reacting an organoaluminum compound with water, which process involves adding a monohydric alcohol to the reaction system during or after the reaction. This publication teaches that the use of such monohydric alcohols increases the storage stability of the aluminoxane in an aromatic hydrocarbon solvent such as toluene.

The present invention provides novel aluminoxane compositions displaying storage stabilities which are at least as good and in general better than those of the compositions disclosed in this Japanese Patent Publication.

Japanese Patent Publication No. 49293/92 describes aluminoxane solutions comprising an aluminoxane, an aromatic hydrocarbon and a polar compound which can be either a halogenated hydrocarbon or a compound not containing active hydrogen but having at least one species of oxygen, sulfur, nitrogen, or phosphorus atom. O-dichlorobenzene was actually used in the Examples in this patent publication with a mention of dioxane in the preparation of the aluminoxane.

### SUMMARY OF THE INVENTION

The present invention relates to a composition comprising a polymethylaluminoxane and an organic solvent in which the polymethylaluminoxane is dissolved, said composition being obtainable by utilizing, either as a reagent in forming the polymethylaluminoxane or as an additive, a solution storage stability enhancing organic compound containing at least one electron-rich heteroatom and at least one hydrocarbyl group, characterized in that said organic compound is utilized in an amount of 0.1 mole% to 15 mole%, based on the molar amount of aluminum, and prevents the formation of solids or gels for at least seven days when the composition is acceleratedly aged at a temperature of 50° to 55°C, said organic compound being selected from
a) compounds containing an active hydrogen atom, with the proviso that when the selected organic compound is a hydrocarbyl alcohol (ROH), it is selected from hexanol, octanol, decanol, dodecanol, 2-ethyl-1-butanol, and nonylphenol;
   and
(b) compounds containing no active hydrogen atom.

A polymethylaluminoxane composition in accordance with this invention, is formed by the use, as either an original reagent or as a later additive, of an organic compound containing an electron-rich heteroatom and hydrocarbyl substituents to achieve the enhanced solution stability characteristics and, in some cases, enhanced activity in olefin polymerization for the polymethylaluminoxane which results. Representative compounds which contain these features include organic hydrocarbyl compounds containing electron-rich heteroatoms with active hydrogen atoms and organic hydrocarbyl compounds containing electron-rich heteroatoms without the additional presence of active hydrogen atoms. The polymethylaluminoxane composition of the present invention can be formed, for example:
(1) by originally reacting and/or complexing trimethylaluminum, the compound containing the electron-rich heteroatom and the selected hydrocarbyl moiety or moieties, and water as reagents; or
(2) by combining the compound containing the electron-rich heteroatom and the hydrocarbyl moiety or moieties with a pre-formed polymethylaluminoxane. Modified polymethylaluminoxane of the type described in U.S. Patent No. 5,041,584, where a portion of the methyl groups in conventional polymethylaluminoxane are replaced by higher alkyl groups, is intended to be embraced by the term "polymethylaluminoxane" as used herein to the extent that the proportion and/or nature of the higher alkyl groups (i.e, the C₂ or higher alkyl groups) is not sufficient to confer the desired degree of solution stability on the entire system.

### DETAILED DESCRIPTION OF THE INVENTION

Conventional, unmodified polymethylaluminoxane comprises or contains the recurring unit 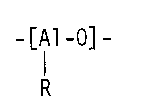 where R is methyl, as one of the principal and essential repeating units. The product may be linear, cyclic, or mixtures thereof. This material has well-recognized post-precipitation problems in organic solvent media upon storage, as previously described. It is formed by reacting trimethylaluminum with a source of water. Many specialized techniques for doing so are known to persons of ordinary skill in the art. U.S. Patent No. 5,041,585 to D. L. Deavenport et al . describes an especially preferred means for reacting trimethylaluminum with an atomized spray of water, illustrating such a preferred technique. The use of an aluminoxane reaction moderator, i.e., a preformed polymethylaluminoxane, for use in such a procedure is described in U.S. Patent No. 5,206,401.

In accordance with the present invention, more enhanced organic solvent solubility characteristics, with a concomitant reduction of post-precipitation or gelation problems, and, in some cases, enhanced polymerization activity, can be achieved for such polymethylaluminoxane compositions by utilization of a certain type of organic compound, as either a reagent in forming the polymethylaluminoxane or as an additive to a previously formed polymethylaluminoxane. The organic compound which has been found to be useful in accordance with the present invention has two essential features. The first is at least one electron-rich heteroatom (e.g., containing one or more unshared electron pair(s)), such as one or more heteroatoms from Groups V and/or VI of the Periodic Table of the Elements, such as oxygen, nitrogen, phosphorus and/or sulfur. In many cases, the compound will also have an active hydrogen atom attached to the heteroatom as in the case of alcohols and thiols, but this is not essential since trialkyl amines and dialkyl ethers, which lack an active hydrogen atom but which have an electron-rich nitrogen or oxygen atom, are effective. The second feature is hydrocarbyl substitution which will generally be, in the aggregate with the combination of the carbon/hydrogen content of the molecule, sufficiently large to give the requisite degree of solubility for the polymethylaluminoxane. Representative hydrocarbyl groups include alkyl of, for example, C₄ or higher, aryl, alkaryl, and aralkyl. In the case of certain compounds, however, such as trialkyl amines or dialkyl ethers, the hydrocarbyl groups, in the aggregate, should generally give a total carbon content for the hydrocarbyl groups in the compound of at least eight carbon atoms.

Generally, the amount of electron-rich heteroatom-containing compound to be utilized in accordance with the invention will be present at up to about 15 mole%, based on the weight of polymethylaluminoxane present or to be formed, in a preferred embodiment, although higher amounts can be used to achieve solution stability. In the latter cases, however, reduction in the catalytic activity of the treated polymethylaluminoxane is sometimes observed. Generally speaking, the person of ordinary skill in the art will probably select a level of from about 0.1 mole % to about 10 mole %, based on the amount of polymethylaluminoxane present or to be formed in order to achieve the best balance of solution stability and catalytic activity.

One way to practice the invention is to include the selected amount of the compound, containing the electron-rich heteroatom(s) and hydrocarbyl group(s), with the trimethylaluminum-containing reagent, normally employed to synthesize the polymethylaluminoxane (and, optionally, a preformed polymethylaluminoxane reaction moderator), followed by reaction of the resulting mixture with water to form a polymethylaluminoxane product. Alternatively, the compound can be placed in an appropriate hydrocarbon solvent to which the trimethylaluminum-containing reagent and water are thereafter added either simultaneously or in sequence. In both of these embodiments, the compound, which is used in accordance with the present invention, is added during the process of forming the polymethylaluminoxane and is thereby incorporated in the final solubilized polymethylaluminoxane which is formed in solubilized form in the solvent.

If desired, the compound can alternatively be added to a hydrocarbon solvent containing a pre-formed, solubilized polymethylaluminoxane with, for example, heating to achieve the desired degree of interaction and thereby achieve the results intended for the present invention.

While the precise manner in which the electron-rich heteroatom-containing, hydrocarbyl group-containing compound functions to achieve the positive effect of the present invention is not known, it is believed that such a compound may somehow either react with or coordinate with the polymethylaluminoxane or free trimethylaluminum by virtue of the electron-rich nature of the heteroatom. This coordination/reaction might prevent undesired coordination between adjacent polymethylaluminoxane chains or oligomeric/polymeric structures, which would normally occur in the absence of the compound, leading to decreased solubility of such resulting materials in organic solvent solution. Alternatively, addition of the compound containing the electron-rich heteroatom may impart enhanced solution stability by interacting primarily with free trimethylaluminum in the solution to reduce its reactivity thereby interfering with the aging reaction between free trimethylaluminum and polymethylaluminoxane. These explanations are set forth as a possible theory of operation, and there is no intention on the part of the present inventors to be bound by such a theory merely because it is given as a potential explanation for the results observed.

As indicated earlier, it is within the purview of the present invention to use compounds containing heteroatoms, such as those from Groups V and VI of the Periodic Table of the Elements, which are capable of donating electrons (i.e., a so-called electron-rich site) to the electron deficient aluminum atoms of the polymethylaluminoxane in solution to, presumably, form complexes or reaction products which result in increased solution stability for the resulting product. One class of compound for use herein are compounds containing the electron-rich heteroatom site and at least one active hydrogen atom. Yet another class of useful compounds are those containing the previously described heteroatom which do not contain an active hydrogen atom. Non-limiting examples of such reagents containing such a hydrogen atom include compounds having the following general structures (where R is the selected hydrocarbyl group): ROH; RCO₂H; RNH₂; R₂NH; RSH; RCONH₂; RCONHR; RN(CH₂CH₂OH)₂; R₂NCH₂CH₂OH; RC(O)NHCH₂CH₂OH; RC(S)OH; and R₂PO₂H. Other compounds for use include, as representative examples, compounds containing an electron-rich heteroatom which do not contain an active hydrogen atom and which are of the following general formulae: RCONR₂; RSR; ROR; RC(O)OR; RC(O)R; RC(S)R; and RC(O)H, where R is as defined above. An especially preferred R group is higher alkyl (C₄ or higher) which is optionally branched at the β carbon or a carbon further removed from the a carbon atom. The preferred mode of addition is to react the active hydrogen containing hydrocarbyl moiety with preformed polymethylaluminoxane. However, incorporation into the final product can also be achieved by adding the modifier to the trimethylaluminum-containing reagent in a suitable solvent followed by addition of water, or by adding the compound to the solvent before water and trimethylaluminum-containing reagent are added, to produce the stabilized polymethylaluminoxane/solvent composition.

Examples of such electron donor compounds, which form one type of effective compound for use herein, include the trihydrocarbyl amines, e.g., tri-n-octylamine, the trihydrocarbylphosphines, e.g., triphenylphosphine, and the dihydrocarbyl ethers, e.g., diphenylether. Ethers and amines with a total carbon content in their hydrocarbyl groups of C₈ or higher, are a preferred class of compounds to use. Two particular compounds of this general type which are particularly preferred from the standpoints of performance, availability, and cost are tridodecylamine and dibutylether.

A variety of general factors can be used to assist in the selection of particular, appropriate electron-rich heteroatom-containing and hydrocarbyl group-containing compound:
(1) If substituents are present on the backbone or nucleus of the selected compound, they should not give rise to an undue amount of steric hindrance in the vicinity of those portions of the compound (namely, the heteroatom or heteroatoms) which are believed to coordinate or react with the preformed aluminoxane or in forming the desired aluminoxane. Examples include: t-butanol; t-pentanol; cyclohexanol; 2,2-dimethyl-3-pentanol; 2,3-dimethyl-3-pentanol; butylated hydroxy toluene; 1,1-dipheny!ethanol; triethylsilanol; diphenylamine; and triphenylamine.
(2) The use of multifunctional reagents in which the various functional groups are capable of reacting with, or in forming, more than one methylaluminoxane molecule so as to lead to bridged, or ultrahigh molecular weight species which readily precipitate are also not deemed to be preferred. Examples include: triethylene glycol monomethyl ether and 4-methoxyphenol.
(3) Solution stability shows increase as the hydrocarbyl group increases in size and molecular weight. For example, methanol, when used as the alcohol reagent, yields either no stability enhancement or poor stability enhancement beyond four days, whereas dodecanol imparts stability for fourteen days under the test procedure to be described below. Alcohols of intermediate size imparts stability enhancements which are intermediate in scope: 2-ethyl-1-butanol (nine days); and 1-hexanol (twelve days).
(4) There is a concentration factor. With para-nonylphenol for example, the stability was observed to increase as the molar percent was raised, e.g., at 0.1, 0.5, 1.0, 5.0 and 10.0 mole % levels, respectively. Post-precipitation was observed within a few days with 0.1 and 0.5 mole % levels using an accelerated aging test protocol. The 1.0 mole % level lasted for several weeks before noticeable precipitation was observed. The 5.0 and 10.0 mole % concentrations showed no tendency to post-precipitate.

The present invention is further illustrated by the Examples which follow.

### EXAMPLE 1

### Procedure for Testing Stability

Candidates for use as a stabilizer in solutions of polymethylaluminoxane (PMAO) in toluene were tested using a test protocol which, for convenience, would accelerate the potential gelation or precipitation phenomenon normally observed with polymethylaluminoxane-solvent compositions over the period of many weeks to several months, depending upon the ambient temperature during storage. For example, PMAO solutions with aluminum concentrations of 10%-11% will normally show storage stabilities, before gelation/precipitation is noted, of less than about three months when stored in steel containers exposed to outside ambient temperatures in Texas. The PMAO was formed by use of the water aspiration technique described in U.S. Patent No. 5,041,585. Initial testing was conducted to verify the effectiveness of a variety of potential stabilizers. This involved addition of 1 mole % concentrations (molar ratio of additive/Al concentration in PMAO = 1:100) of the chemical to PMAO/toluene which contained 10 wt% soluble aluminum. This blend of material was transferred to a 50 ml Wheaton® vial and recapped with a Teflon® coated liner (to prevent interaction of toluene with rubber liner) under a nitrogen atmosphere in a dry box. The vial was placed in an oil bath maintained at 50-55°C.

The vial contents were observed on a daily basis for changes in appearance and documented appropriately. Experiments were terminated after thirty days. Substrates that inhibited or substantially reduced solids formation under these conditions were subjected to additional testing. In the above tests, controls were run against a majority of the compounds tested in the same experiment. All controls showed gel or solids formation at four days or sooner.

Further experimentation was conducted to determine optimum concentrations of potential stabilizers. Varying mole % concentrations of the substrate were tested using the procedure previously described. These vials were observed on a daily basis and sampled at two week intervals to determine the aluminum content. At the end of the thirty day period the results were evaluated.

Table 1 lists the results in stability testing of substrates for PMAO/toluene. PMAO/toluene from the same lot was used for all testing. Both initial and final aluminum values were determined in most cases. The percent soluble aluminum loss after the thirty day heating period was also reported for a majority of the runs.

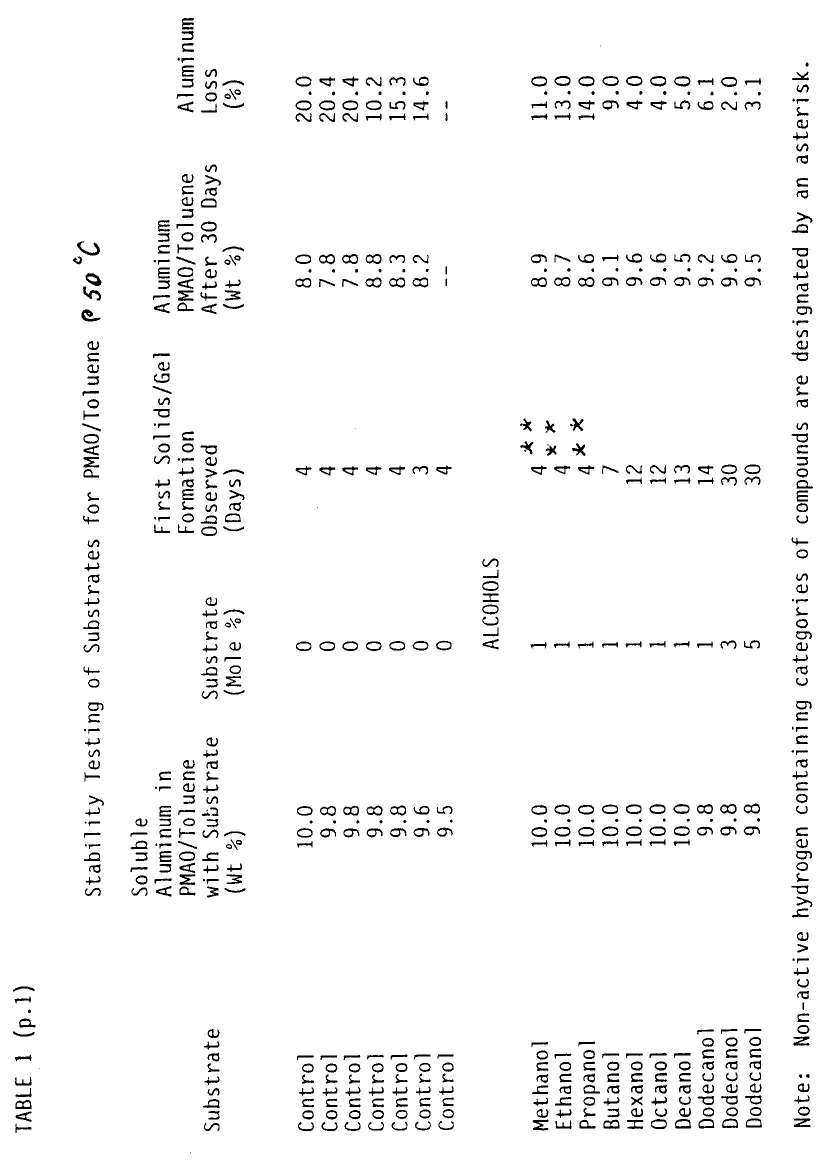

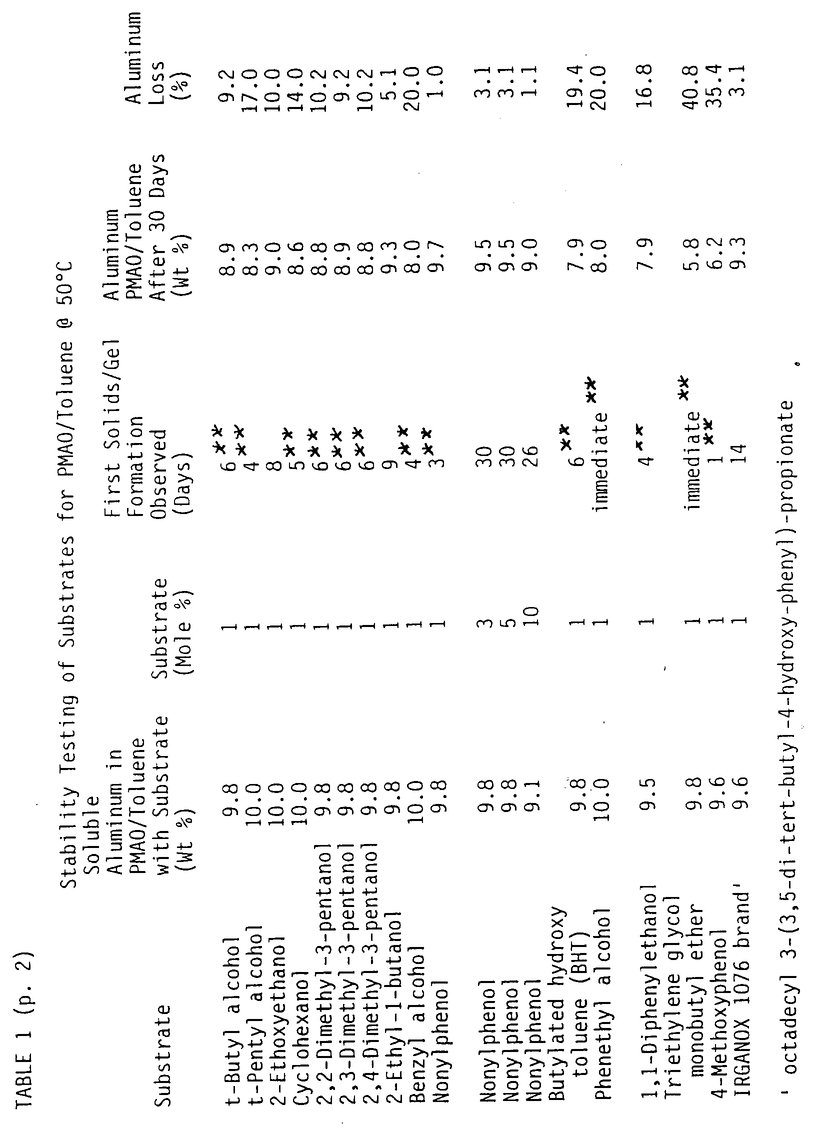

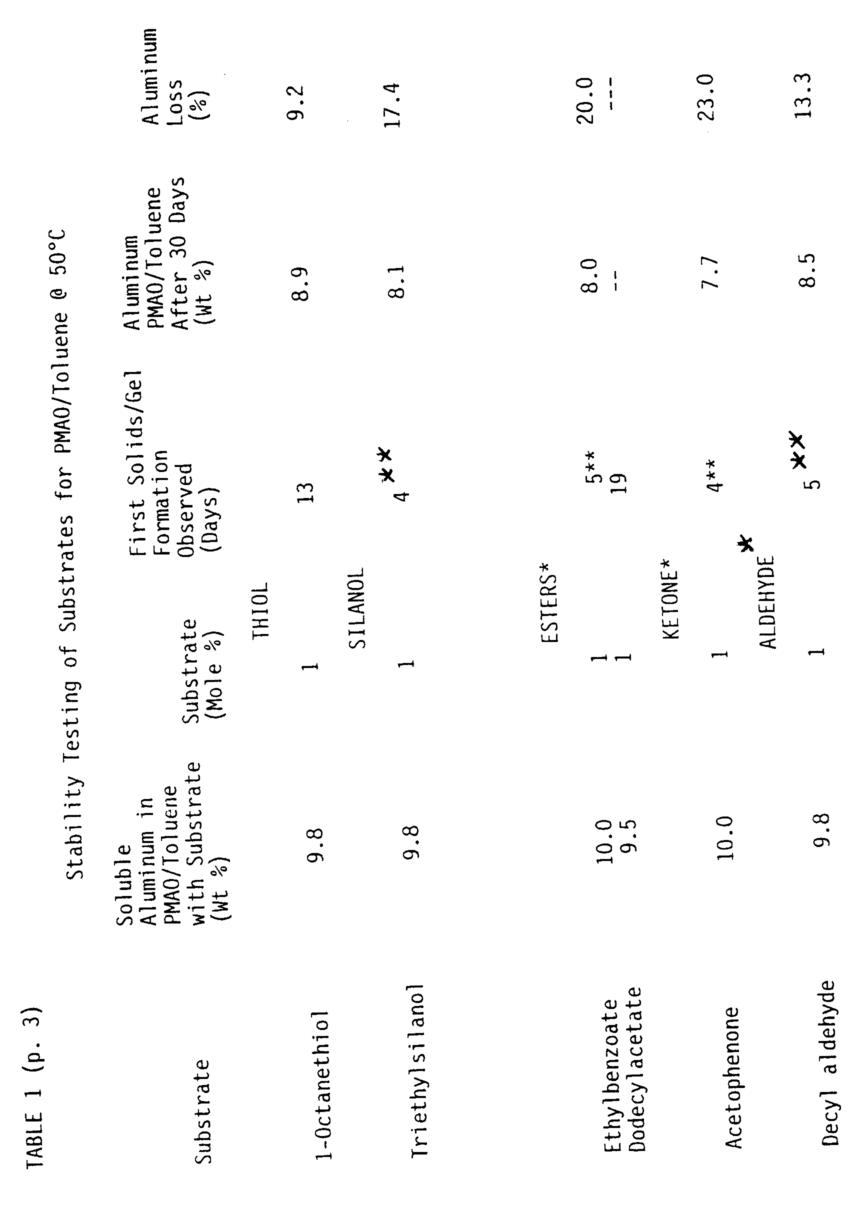

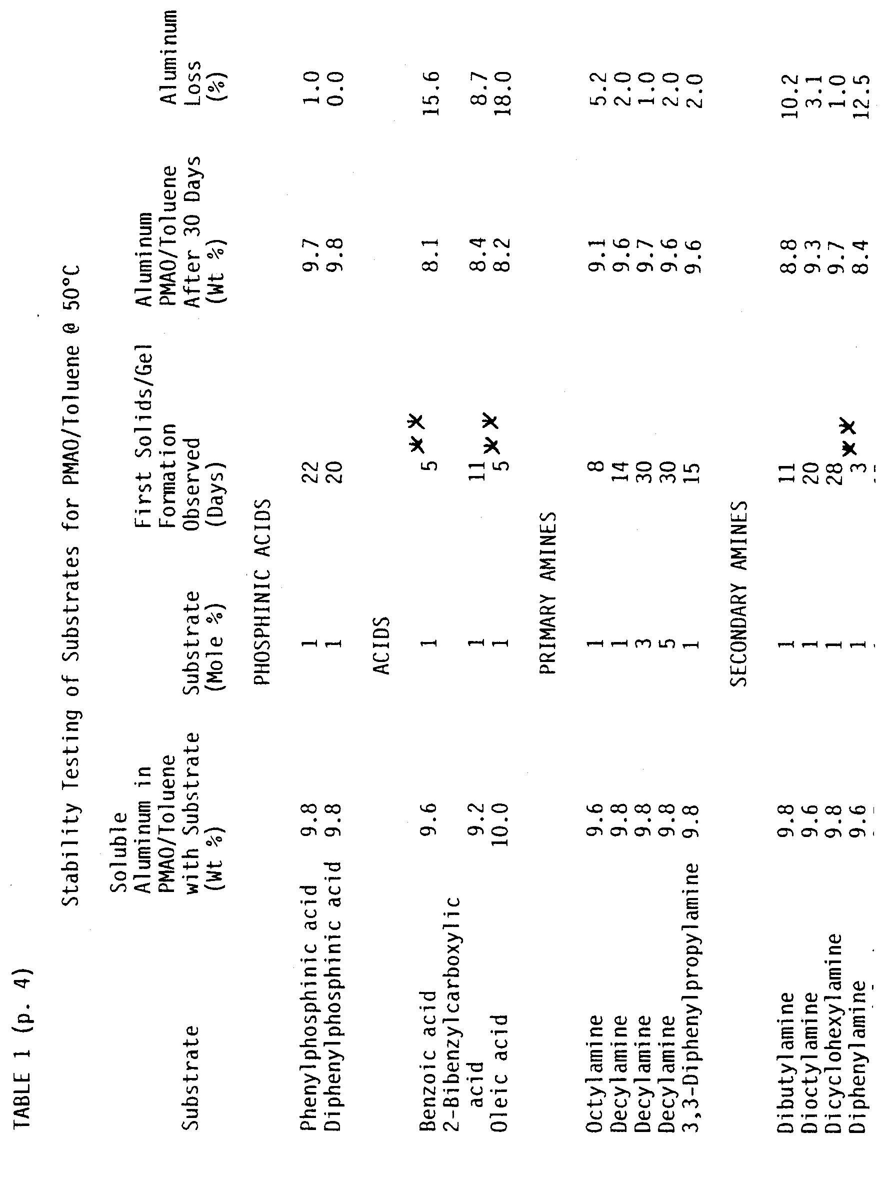

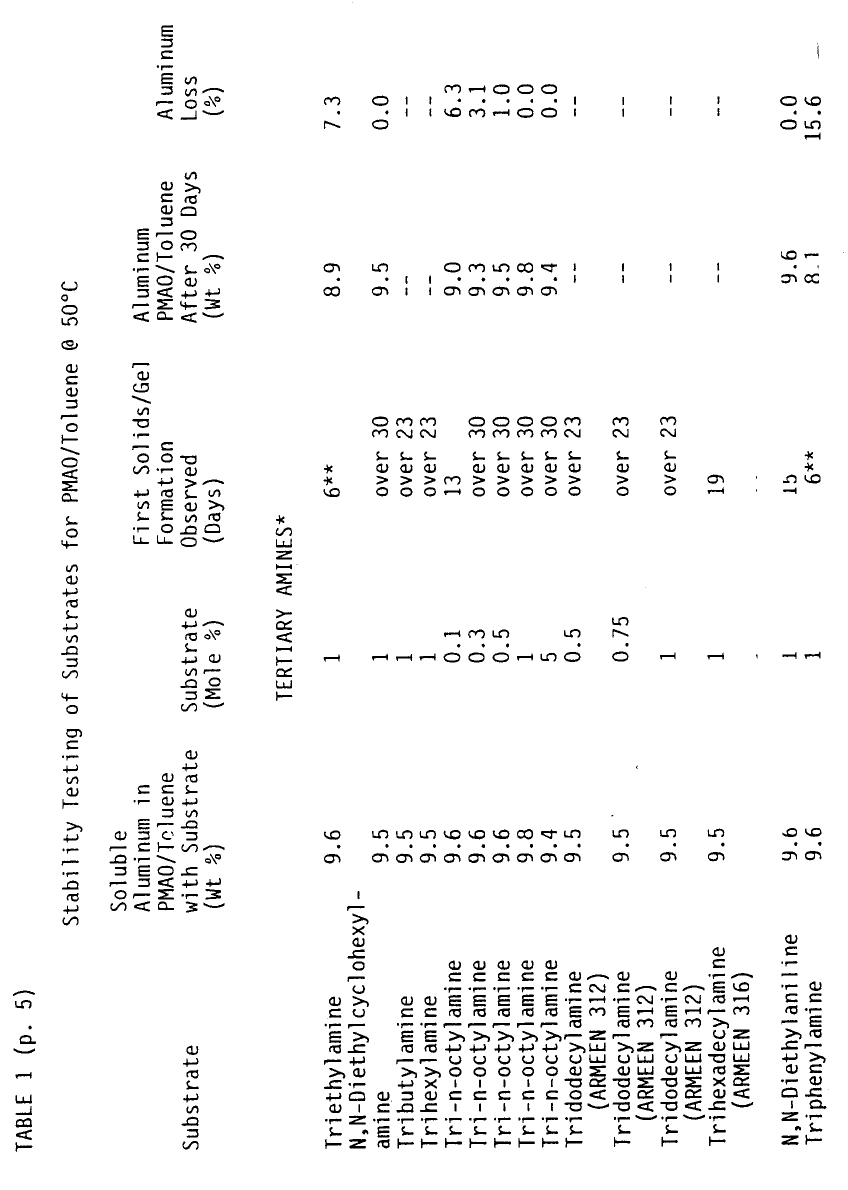

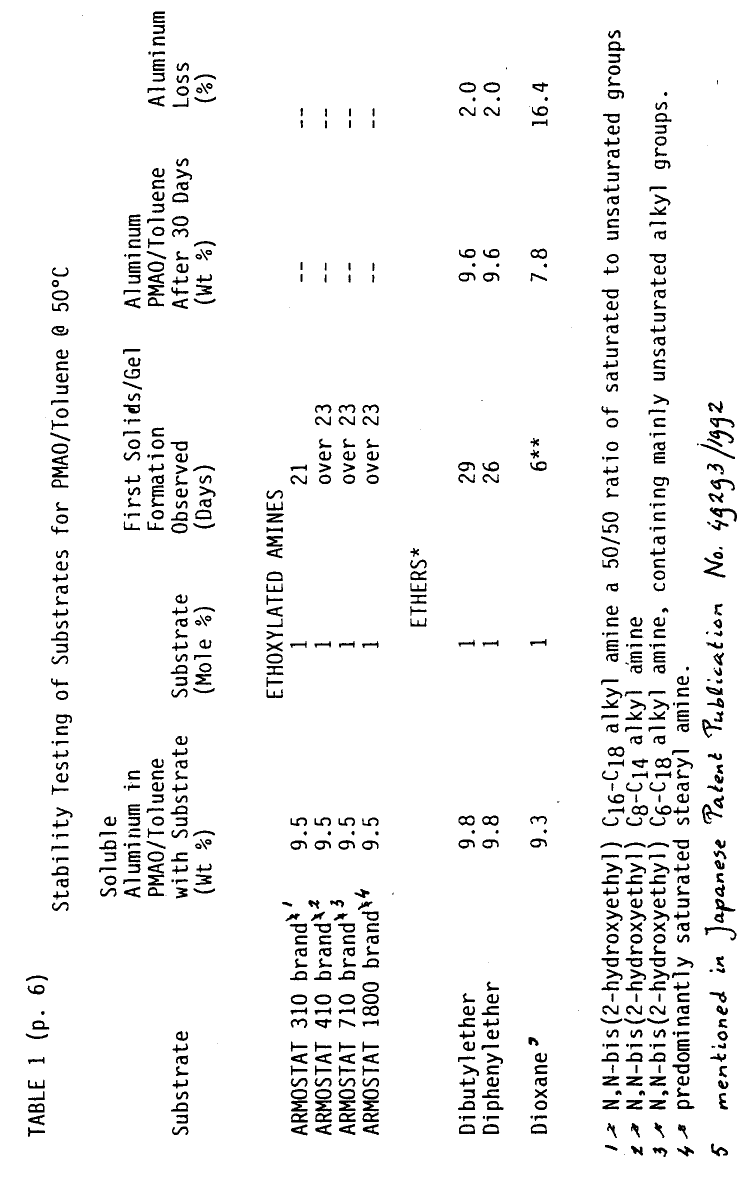

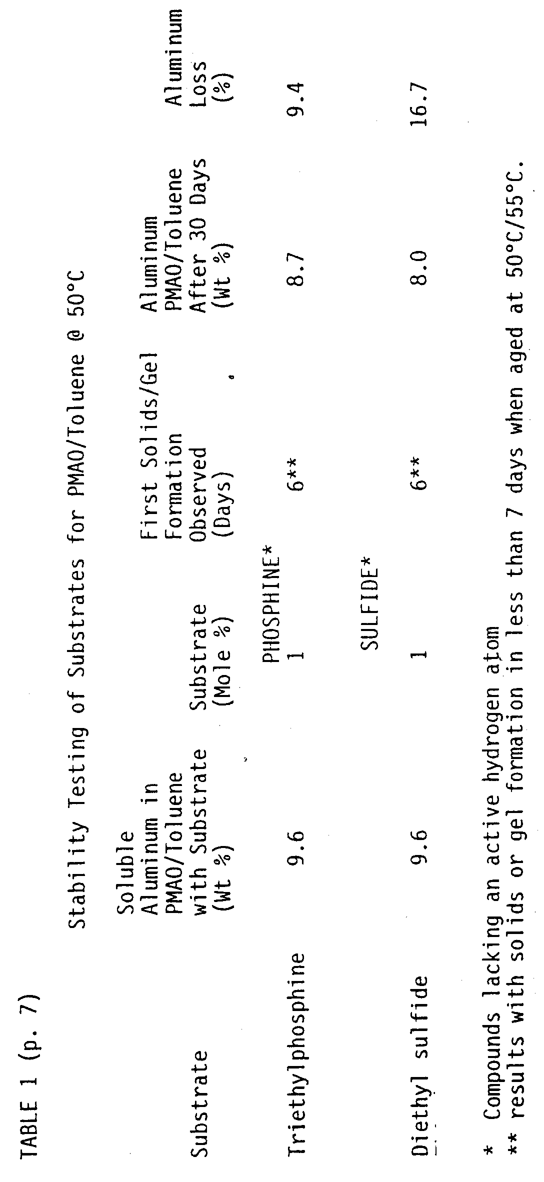

The Table set forth above gives data regarding the effectiveness of two of the compounds specifically mentioned as possible solution stability additives in Japanese Patent Publication No. 49293/1992 when tested in an accelerated aging test at 50°-55°C:

| Compound | First Solids/Gel Formation Observed (Days) |
|---|---|
| Triethylamine | 6 |
| Dioxane | 6 |

In both cases, the solids or gel formation was first observed in six days. Hence, it is deemed unexpected that it is possible to achieve solution stabilities for conventional polymethylaluminoxane of no less than one week, often considerably longer in an accelerated aging test, using certain types of non-active hydrogen containing compounds as described herein, which, in general, contain, in the aggregate, hydrocarbyl groups of about C₈ or above. The stability data set forth in the Japanese patent publication is under ambient conditions where non-gelation of polymethylaluminoxane, as illustrated in Example 4 hereinafter, can extend for periods well over one week in the absence of any stabilizer. Accelerated aging at elevated temperature (for example, 50°-55°C) will generally result in solids formation or gelation in less than one week (for example four or five days) particularly if the aluminum concentration is in the range of 5%-10%. It thus appears from comparing Example 4 with the stability data discussed above that the stabilities shown in the Japanese patent publication at ambient conditions correspond to the present findings, under elevated temperature conditions, that the triethylamine and dioxane additives exert little, if any, effect on solution stability of the polymethylaluminoxane.

### EXAMPLE 2

### Ethylene Polymerization Procedure

A one liter stainless steel autoclave was heated to 100°C for one hour to remove moisture and then placed under a nitrogen purge while cooling. The autoclave was then pressurized 3.1026 bars (45 psig) with ethylene and vented twice. The autoclave was then filled with 500 cc of anhydrous, high purity toluene from Aldrich Chemical Co., was pressurized with ethylene and was heated to 80°C. The ethylene was then vented, and the system was repressurized and vented. At this point, aluminoxane/toluene/stabilizer solution (containing 4 x 10⁻³ moles Al) was added by syringe. After about one minute of stirring, a freshly prepared solution containing 1 x 10⁻⁷ moles of zirconocene dichloride (Cp₂ZrCl₂) in toluene was added. The system was then pressurized to 3.1026 bars (45 psig) with ethylene and the polymerization was conducted at 80°C for fifteen minutes. The polymerization was terminated by venting the ethylene. The polymer was dried to constant weight and an activity value was calculated on the basis of gPE/(gZr.atm.hr). Table 2 shows the ethylene polymerization activities of PMAO/toluene solutions containing certain substrates, respectively:

**TABLE 2**

| Substrate | Mole% | Activity (10⁶gPE/gZr.atm.hr) | % Gain or (% Decrease) |
|---|---|---|---|
| Control | 0 | 1.66 | 0 |
| Nonylphenol | 1 | 1.72 | 4 |
| Nonylphenol | 3 | 1.60 | (4) |
| Nonylphenol | 5 | 1.23 | (26) |
| Nonylphenol | 10 | 0.64 | (61) |
| Dodecanol | 1 | 1.52 | (8) |
| Dodecanol | 3 | 1.05 | (37) |
| Dodecanol | 5 | 0.88 | (47) |
| IRGANOX 1076 brand | 1 | 1.45 | (13) |
| Decylamine | 1 | 1.71 | 3 |
| Decylamine | 3 | 1.35 | (19) |
| Decylamine | 5 | 0.85 | (49) |
| Dibutylether | 1 | 2.12 | 28* |
| Dioctylether | 1 | 1.78 | 7 |
| Diphenylether | 1 | 1.68 | 1 |
| Dioctylsulfide | 1 | 1.78 | 7 |
| Octylamine | 1 | 1.58 | (5) |
| Dioctylamine | 1 | 1.94 | 17* |
| Triethylamine | 1 | 1.53 | (8) |
| Diphenylphosphinic acid | 1 | 1.18 | (29) |
| Tri-n-octylamine | 1 | 2.39 | 44* |
| Tri-n-octylamine | 5 | 1.93 | 16* |
| ALIQUAT brand | 1 | 0.19 | (89) |
| Triethylphosphine | 1 | 0.85 | (49) |
| Diphenylphosphinic acid | 1 | 1.18 | (29) |
| ARMOSTAT 410 brand | 1 | 1.78 | 7 |
| ARMOSTAT 710 brand | 1 | 2.06 | 24* |
| ARMOSTAT 1800 brand | 1 | 1.61 | (3) |
| Dibutylether** | 1 | 1.66 | 0 |
| ARMEEN 312 brand | 0.75 | 2.03 | 22* |
| ARMEEN 312 brand | 1 | 2.15 | 30* |

| | | | |
|---|---|---|---|
| * particularly preferred % gains were achieved. | | | |
| ** substrate was introduced during the production of the PMAO/toluene composition. | | | |

### EXAMPLE 3

Three test substrates were added to PMAO in toluene at a molar ratio of 1:100 substrate to aluminum. Ethylene polymerization tests were conducted at several different stages of aging using the procedure described in Example 2. All aging times are at room temperature unless otherwise indicated. The identity of the tested substrate and the results of the polymerization activities are given in Table 3:

**TABLE 3**

| Aging Conditions | Polymer. Activity (10₆ PE/g Zr.atm.hr) | % Gain or (Decrease) |
|---|---|---|
| | No Substrate (Control) | |
| None | 1.66 | --- |

| | Trioctylamine Substrate | |
|---|---|---|
| 0 Days | 2.16 | 30 |
| 3 Days | 3.16 | 90 |
| 5 Days | 3.19 | 92 |
| 60 Days* | 3.34 | 101 |

| | Dioctylamine Substrate | |
|---|---|---|
| 0 Days | 1.58 | (5) |
| 9 Days at 50°C | 2.45 | 48 |

| | Dioctylether Substrate | |
|---|---|---|
| 0 Days | 1.78 | 7 |
| 6 Days | 2.79 | 68 |

| | | |
|---|---|---|
| * 30 days at 50°C. followed by 30 days at ambient. | | |

### EXAMPLE 4

This Example is presented to illustrate that solutions of toluene containing polymethylaluminoxane (PMAO) and no stabilizer are subjected to solids formation and/or gelation much more quickly at elevated temperature than at ambient temperature. The samples were taken either from various stages of an actual reaction run to make PMAO ("reactor samples") or were made by dilution of the end product from such a run ("diluted samples").

### PART A

Purpose: Preparation of reactor samples.
Procedure: Samples were taken at three states (25%, 50% and 75% charge of water and trimethylaluminum (TMAL)/toluene added at a concentration of 0.5 mole water per mole of aluminum) and at the conclusion of a pilot plant run to produce PMAO toluene. Each sample was analyzed for aluminum content. Preparation of the intermediate material was completed in glassware. A 1000 ml flask equipped with a stirring bar, sampling port with stopcock and septum, thermowell and nitrogen inlet/outlet was used. A nitrogen blanket was maintained on the flask throughout the procedure. A quantity of unfinished material was transferred to the flask. The apparatus was placed in an oil bath mounted on a heating/stirring plate. Stirring was initiated, and the bath temperature was lowered to 0°C using dry ice. The bath and flask temperatures were monitored by thermocouple. Water was added (to a total of 0.75 mole of water per mole of aluminum) from a position approximately 1.27 cm (1/2 inch) above the surface of the liquid using a 5 ml syringe equipped with a Luer-Lok® stopcock and a 25.4 cm (10 inch) 22 gauge needle. Water was added at an approximate rate of 10 drops per minute (a temperature range of 0 to 5°C was maintained by making adjustments to water addition rates). The solution was slightly cloudy with a few solid chunks following this step. The flask was heated at 80°C for sixty minutes. The flask was removed from the oil bath and cooled to room temperature. The solids were allowed to settle and the supernatant was removed and analyzed for aluminum content. The Table below contains information regarding sample preparation:

| PREPARATION OF PMAO/TOLUENE | | | | |
|---|---|---|---|---|
| Stage of Sampling in Pilot Plant Run | Wt% Aluminum in Unfinished Sample | Wt of PMAO/ Toluene (g) | Vol.of Water Added (ml) | Wt% Aluminum of Final Product |
| 25% | 4.5 | 352.6 | 1.5 | 3.8 |
| 50% | 6.9 | 383.0 | 3.2 | 6.3 |
| 75% | 9.1 | 371.6 | 4.5 | 8.4 |
| 100% | 10.6 | 371.6 | 0.0 | 10.6 |

### PART B

Purpose: Preparation of diluted samples.
Procedure: Plant toluene (99.6% minimum purity) was dried overnight using molecular sieve. PMAO/toluene containing 10.6 wt% aluminum (from Procedure A) was diluted using the dried solvent to produce solutions with 4.8%, 7.0% and 8.4 wt% aluminum.

### PART C

Purpose: Determine stability of PMAO/toluene with varying aluminum concentrations at differing temperatures.
Procedure: Approximately 40 mls of each sample prepared in Procedures A and B was transferred to two 50 ml Wheaton® vials and recapped with a Teflon® coated liner (to prevent interaction of toluene with rubber of liner) in a dry box. A vial of each sample was placed in oil baths maintained at a temperature of 50°C. The other vial was stored at room temperature (18-23°C). The vial contents were observed on a daily basis for 47 days and intermittently thereafter for 195 days. Changes in appearance were documented appropriately. All sample vials contained solids at the end of the 195 day period. Results are listed in the following table:

| STABILITY TESTING | | |
|---|---|---|
| Temp (°C) | Initial Conc. (% Soluble Al) | First Solids/Gel (days) |
| RT* | 3.8 | over 47 |
| 50* | 3.8 | 6 days |
| RT** | 4.8 | 43 days |
| 50** | 4.8 | 5 days |
| RT* | 6.3 | 28 days |
| 50* | 6.3 | 5 days |
| RT** | 7.0 | 27 days |
| 50** | 7.0 | 5 days |
| RT* | 8.4 | 12 days |
| 50* | 8.4 | 5 days |
| RT** | 8.5 | 27 days |
| 50** | 8.5 | 5 days |
| RT* | 10.6 | 12 days |
| 50* | 10.6 | 5 days |

| | | |
|---|---|---|
| * reactor sample | | |
| ** dilution sample | | |

The percent loss of soluble aluminum rose in all cases with increased storage temperature with the loss being generally less than 10% at room temperature and 30°C, over 10% at 40°C, and over 20% at 50°C.

The foregoing Examples are intended to merely illustrate certain embodiments of the present invention and, for that reason, should not be construed in a limiting sense. The scope of protection sought is set forth in the claims which follow.

## Claims

1. A composition comprising a polymethylaluminoxane and an organic solvent in which the polymethylaluminoxane is dissolved, said composition being obtainable by utilizing, either as a reagent in forming the polymethylaluminoxane or as an additive, a solution storage stability enhancing organic compound containing at least one electron-rich heteroatom and at least one hydrocarbyl group, characterized in that said organic compound is utilized in an amount of 0.1 mole% to 15 mole%, based on the molar amount of aluminum, and prevents the formation of solids or gels for at least seven days when the composition is acceleratedly aged at a temperature of 50° to 55°C, said organic compound being selected from
a) compounds containing an active hydrogen atom, with the proviso that when the selected organic compound is a hydrocarbyl alcohol (ROH), it is selected from hexanol, octanol, decanol, dodecanol, 2-ethyl-1-butanol, and nonylphenol;
and
(b) compounds containing no active hydrogen atom.

2. A composition according to claim 1, wherein the heteroatom is selected from oxygen, nitrogen, phosphorus, and sulfur.

3. A composition according to claim 2, wherein the organic compound is selected from
a) compounds containing an active hydrogen atom selected from hexanol, octanol, decanol, dodecanol, 2-ethyl-1-butanol, nonylphenol, RCO₂H, RNH₂, R₂NH, RSH, RCONH₂, RCONHR, RN(CH₂CH₂OH)₂, R₂NCH₂CH₂OH, RC(O)NHCH₂CH₂OH, RC(S)OH, phenylphosphinic acid, and R₂PO₂H;
and
b) compounds containing no active hydrogen atom selected from RCONR₂, RSR, ROR, RC(O)OR, RC(O)R, RC(S)R, RC(O)H, trihydrocarbyl amines, and trihydrocarbyl phosphines;
R being a hydrocarbyl group.

4. A composition according to claim 3, wherein the hydrocarbyl (R) group or groups are C₄ or higher alkyl.

5. A composition according to claim 3, wherein the organic compound is ROR or a trihydrocarbyl amine and the hydrocarbyl (R) groups in the aggregate contain at least eight carbon atoms.

## Patentansprüche

1. Zusammensetzung, die ein Polymethylaluminoxan und ein organisches Lösungsmittel enthält, in welchem das Polymethylaluminoxan gelöst ist, welche Zusammensetzung erhältlich ist durch Verwendung einer die Lagerungsstabilität der Lösung erhöhenden organischen Verbindung, entweder als Reagenz bei der Bildung des Polymethylaluminoxans oder als Additiv, wobei die organische Verbindung mindestens ein elektronenreiches Heteroatom und mindestens eine Kohlenwasserstoffgruppe enthält, dadurch gekennzeichnet, dass die organische Verbindung in einem Anteil von 0,1 Mol% bis 15 Mol%, bezogen auf den molaren Anteil an Aluminium, verwendet wird und die Bildung von Feststoffen oder Gelen mindestens um sieben Tage verlängert, wenn die Zusammensetzung bei einer Temperatur von 50° bis 55°C beschleunigt gealtert wird, wobei die organische Verbindung gewählt ist aus:
a) Verbindungen, die ein aktives Wasserstoffatom mit der Massgabe enthalten, dass dann, wenn die gewählte organische Verbindung ein Hydrocarbylalkohol (ROH) ist, sie aus Hexanol, Octanol, Decanol, Dodecanol, 2-Ethyl-1-butanol und Nonylphenol gewählt ist, und
b) Verbindungen, die kein aktives Wasserstoffatom enthalten.

2. Zusammensetzung nach Anspruch 1, bei der das Heteroatom gewählt ist aus Sauerstoff, Stickstoff, Phosphor und Schwefel.

3. Zusammensetzung nach Anspruch 2, bei der die organische Verbindung gewählt ist aus
a) ein aktives Wasserstoffatom enthaltenden Verbindungen gewählt aus Hexanol, Octanol, Decanol, Dodecanol, 2-Ethyl-1-butanol, Nonylphenol, RCO₂H, RNH₂, R₂NH, RSH, RCONH₂, RCONHR, RN(CH₂CH₂OH)₂, R₂NCH₂CH₂OH, RC(O)NHCH₂CH₂OH, RC(S)OH, Phenylphosphinsäure und R₂PO₂H, und
b) kein aktives Wasserstoffatom enthaltenden Verbindungen gewählt aus RCONR₂, RSR, ROR, RC(O)OR, RC(O)R, RC(S)R, RC(O)H, Trihydrocarbylaminen und Trihydrocarbylphosphinen, wobei R eine Hydrocarbylgruppe ist.

4. Zusammensetzung nach Anspruch 3, bei der die Hydrocarbylgruppe (R) order -gruppen C₄- oder höheres Alkyl sind.

5. Zusammensetzung nach Anspruch 3, bei der die organische Verbindung ROR oder ein Trihydrocarbylamin ist und die Hydrocarbylgruppen (R) insgesamt mindestens acht Kohlenstoffatome enthalten.

## Revendications

1. Une composition comprenant un polyméthylaluminoxane et un solvant organique dans lequel le polyméthylaluminoxane est dissout, ladite composition pouvant être obtenue en utilisant, soit en tant que réactif pour la formation du polyméthylaluminoxane soit comme additif, un composé organique améliorant la stabilité au stockage de la solution, contenant au moins un hétéroatome riche en électrons et au moins un groupe hydrocarbyle, caractérisée an ce que ledit composé organique est utilisé à raison de 0,1 mole% à 15 moles%, exprimé par rapport à la quantité molaire d'aluminium, et empêche la formation de solides ou de gels pendant au moins sept jours lorsque la composition subit un vieillissement accéléré à une température de 50 à 55°C, ledit composé organique étant choisi parmi (a) les composés contenant un atome d'hydrogène actif, avec cette condition que lorsque le composé organique choisi est un alcool hydrocarbylique (ROH), il est choisi parmi hexanol, octanol, décanol, dodécanol, 2-éthyl-1-butanol et nonylphénol ; et
(b) des composés ne comportant pas d'atomes d'hydrogène actif.

2. Une composition selon la revendication 1, dans laquelle l'hétéroatome est choisi parmi oxygène, azote, phosphore et soufre.

3. Une composition selon la revendication 2, dans laquelle le composé organique est choisi parmi :
a) des composés contenant un atome d'hydrogène actif choisi parmi hexanol, octanol, décanol, dodécanol, 2-éthyl-1-butanol, nonylphénol, RCO₂H, RNH₂, R₂NH, RSH, RCONH₂, RCONHR, RN(CH₂CH₂OH)₂, R₂NCH₂CH₂OH, RC(O)NHCH₂CH₂OH, RC(S)OH, acide phénylphosphinique et R₂PO₂H ; et
b) des composés ne contenant aucun atome d'hydrogène actif, choisis parmi RCONR₂, RSR, ROR, RC(O)OR, RC(O)R, RC(S)R, RC(O)H, trihydrocarbyl amines et trihydrocarbyl phosphines :
R étant un groupe hydrocarbyle.

4. Une composition selon la revendication 3, dans laquelle le groupe ou groupes hydrocarbyle (R) sont des alkyles en C₄ ou supérieurs.

5. Une composition selon la revendication 3, dans laquelle le composé organique est ROR ou une trihydrocarbyl amine et les groupes hydrocarbyles (R) dans l'agrégat contiennent au moins huit atomes de carbone.
